(19) Europäisches Patentamt
European Patent Office
Office européen des brevets

(11) Veröffentlichungsnummer : **0 158 047**
**B1**

(12) # EUROPÄISCHE PATENTSCHRIFT

(45) Veröffentlichungstag der Patentschrift : **22.02.89**

(51) Int. Cl.⁴ : **H 01 M 10/40**

(21) Anmeldenummer : **85101663.4**

(22) Anmeldetag : **15.02.85**

(54) **Elektrochemische Zelle oder Batterie.**

(30) Priorität : **23.02.84 DE 3406472**

(43) Veröffentlichungstag der Anmeldung : **16.10.85 Patentblatt 85/42**

(45) Bekanntmachung des Hinweises auf die Patenterteilung : **22.02.89 Patentblatt 89/08**

(84) Benannte Vertragsstaaten : **BE DE FR GB NL**

(56) Entgegenhaltungen :
**EP--A-- 0 049 970**
**DE--A-- 2 852 161**
**US--A-- 4 132 837**
**PATENTS ABSTRACTS OF JAPAN, Band 8, Nr. 231 (E-274)[1668], 24. Oktober 1984; & JP - A - 59 112 583 (SHOWA DENKO K.K.) 29.06.1984**
**PATENTS ABSTRACTS OF JAPAN, Band 8, Nr. 81 (E-238)[1518], 13. April 1984; & JP - A - 59 3872 (SHOWA DENKO K.K.) 10.01.1984**
**PATENTS ABSTRACTS OF JAPAN, Band 7, Nr. 115 (E-176)[1260], 19. Mai 1983; & JP - A - 58 35 874 (KAO SEKKEN K.K.) 02.03.1983**

**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Heinze, Juergen, Dr.**
**Runzstrasse 65**
**D-7800 Freiburg (DE)**
Erfinder : **Mortensen, John, Dr.**
**Reckenweg 4**
**D-7801 Stegen (DE)**

**EP 0 158 047 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft elektrochemische Zellen, insbesondere elektrochemische Speicherelemente mit mindestens 2 Elektroden und einem Elektrolyten aus mindestens einer in einem organischen Elektrolytlösungsmittel gelösten oder suspendierten ionischen oder ionisierbaren Verbindung als Leitsalz, in denen die Anode oder beide Elektroden als aktives Elektrodenmaterial ein elektrochemisch, vorzugsweise reversibel oxidierbares und/oder reduzierbares Polymeres mit einer elektrischen Leitfähigkeit größer als $10^{-2}$ $\Omega^{-1}$ $cm^{-1}$ enthalten bzw. hieraus bestehen.

In der EP-A-36 118, EP-A-49 970, EP-A-50 441 sowie der EP-A-58 469 werden leichte Batterien hoher Energie- und Leistungsdichte beschrieben, die als elektrodenaktives Material der Kathode und/oder Anode ein elektrisch hochleitfähiges, p- oder n-dotiertes konjugiertes Polymer, insbesondere Polyacetylen, enthalten. Die konjugierten Polymeren lassen sich mit den im Elektrolyt enthaltenen ionischen oder ionisierbaren Verbindungen reversibel elektrochemisch dotieren und entdotieren und so in Abhängigkeit von dem Dotierungsgrad in verschiedene Oxidations- oder Reduktionsstufen überführen. In einer typischen und vorteilhaften Ausführungsform enthalten diese Batterien z. B. eine Lithium-Anode und eine Kathode aus n-dotiertem Polyacetylen. Die Elektrolytsalze, wie z. B. Lithiumperchlorat, Lithiumhexafluoroarsenat, Lithiumhexafluoroantimonat oder Lithiumhexafluorophosphat, sind vorzugsweise in organischen Elektrolytlösungsmitteln gelöst. Als Elektrolytlösungsmittel sind in diesen Druckschriften insbesondere lineare und cyclische Ether, wie Ethylenglykoldimethylether, Diethylenglykoldimethylether, festes Polyethylenoxid, Tetrahydrofuran oder Dioxan, aber auch Propylencarbonat, Lactone wie z. B. γ-Butyrolacton, Sulfone, wie z. B. Sulfolan oder substituierte Sulfolane, oder organische Sulfite wie Dimethylsulfit genannt.

Aus der US-A 4 132 837, der DE-A 2 852 161 und der JP-A 58/35 874 sind Batterien bekannt, deren Eigenschaften dadurch verbessert werden, daß die Löslichkeit der eingesetzten Metallsalze durch Zugabe von Komplexliganden (u.a. auch Kronenether) erhöht wird. In keiner dieser Druckschriften werden jedoch elektrochemische Zellen, deren Elektroden aus elektrisch leitfähigen Polymeren bestehen bzw. die solche Polymere enthalten, beschrieben.

Es ist bislang noch nicht gelungen, Batterien auf Basis elektrisch leitfähiger dotierter konjugierter Polymere herzustellen, die allen von der Praxis an die Batterien gestellten Anforderungen genügen. So zeigen diese Batterien vielfach eine unerwünschte Selbstentladung, die ihre Lagerstabilität stark beeinträchtigt. Ebenso ist die Cyclenfestigkeit, d. h. die Zahl der möglichen Auflade- und Entlade-Vorgänge bei Sekundärelementen, häufig noch nicht zufriedenstellend. Bei hohen Cyclenzahlen lassen Energie- und Leistungsdichte dieser Batterien teilweise stark und irreversibel nach. Viele der Mangelerscheinungen dieser Batterien stehen im Zusammenhang mit dem verwendeten Elektrolytsystem. Bei der vielfach bevorzugten Ausführungsform der Batterien wird eine Lithiumanode und eine Kathode aus den elektrisch leitfähigen konjugierten Polymeren verwendet.

Aufgabe der vorliegenden Erfindung war es, elektrochemische Zellen oder Batterien mit der Anode oder beiden Elektroden auf Basis von elektrisch leitfähigen, elektrochemisch oxidierbaren und/oder reduzierbaren Polymeren aufzuzeigen, die neben einer hohen Packungs- und Energiedichte eine verminderte Selbstentladung und damit eine verbesserte Lagerstabilität aufweisen, eine möglichst hohe Stromentnahme erlauben und hohe Cyclenzahlen bei hoher Cyclenstabilität besitzen, d. h. auch nach wiederholter Ent- und Wiederaufladung sollen der zu entnehmende Strom und die Zellspannung sich nicht wesentlich geändert haben, wobei auch beide Elektroden aus dem elektrochemisch oxidierbaren und reduzierbaren Polymeren gebildet sein können.

Es wurde nun gefunden, daß diese Aufgabe gelöst wird, wenn bei den elektrochemischen Zellen oder Batterien der eingangs genannten Art ein Elektrolyt verwendet wird, der einen organischen Komplexliganden aus der Gruppe der Kronenether, Kryptanden oder Podanden mit Einheiten der allgemeinen Formel

$$(-X-CH_2-CH_2-)$$

enthalten, worin X = O, S oder NH bedeutet.

Gegenstand der Erfindung ist demzufolge eine elektrochemische Zelle oder Batterie, enthaltend mindestens zwei Elektroden sowie als Elektrolyt eine Lösung oder Suspension einer ionischen oder ionisierbaren Verbindung als Leitsalz in einem organischen gegenüber den Elektroden indifferenten Elektrolytlösungsmittel, wobei die Anode oder beide Elektroden als aktives Elektrodenmaterial ein elektrochemisch oxidierbares und/oder reduzierbares Polymeres enthalten bzw. hieraus bestehen, welches im oxidierten und/oder reduzierten Zustand eine elektrische Leitfähigkeit größer $10^{-2}\Omega^{-1}$ $cm^{-1}$ besitzt, welche dadurch gekennzeichnet ist, daß der Elektrolyt einen organischen Komplexliganden aus der Gruppe der Kronenether, Kryptanden oder Podanden mit Ethylenglykolether-Einheiten enthält.

Gegenstand der Erfindung sind des weiteren spezielle Ausgestaltungsformen dieser elektrochemischen Zelle oder Batterie entsprechend der nachfolgenden detaillierten Beschreibung.

Die erfindungsgemäßen elektrochemischen Zellen und Batterien zeigen somit im Vergleich zu entsprechenden bekannten Batterien nicht nur eine verbesserte Energie- und Leistungsdichte, sondern es ist auch eine hohe Stromentnahme möglich. Trotz möglicher dichterer Packung der

Elektroden zeigen die erfindungsgemäßen elektrochemischen Zellen und Batterien geringere Strom- und Spannungsverluste. Darüber hinaus ist die Selbstentladung, insbesondere im Vergleich mit entsprechenden bekannten Batterien dieser Art, deutlich vermindert, so daß die erfindungsgemäßen elektrochemischen Zellen oder Batterien eine verbesserte Lagerstabilität besitzen. Ferner lassen sich die erfindungsgemäßen elektrochemischen Elemente und Batterien wiederaufladen, erlauben hohe Zyklenzahlen und besitzen eine große Zyklenstabilität. Außerdem können beide Elektroden aus dem elektrochemisch oxidierbaren bzw. reduzierbaren Polymeren bestehen. Es war überraschend, daß bei Verwendung der organischen Komplexliganden als Zusätze im Elektrolyten die sogenannte n-Dotierung von elektrisch leitfähigen Polymeren besonders gut durchführbar ist. Das heißt, die Polymeren sind beim Aufladen als Kathode und beim Entladen als Anode geschaltet.

Die erfindungsgemäßen elektrochemischen Zellen oder Batterien enthalten Elektrolyte, wie sie unter anderem in der EP-A-36 118, der EP-A-49 970 oder der EP-A-58 469 beschrieben sind. Als Beispiele für solche anderen üblichen organischen Elektrolytlösungsmittel seien genannt : Dimethoxiethan, Diethylenglykoldimethylether, Tetrahydrofuran und dessen Derivate, Propylencarbonat, γ-Butyrolacton und dessen Derivate, N-Methylpyrrolidon, Acetonitril, Dimethylformamid, Dimethylsulfoxid, Sulfolan und dessen Derivate, Ethylensulfit und Dimethylsulfit. Bevorzugt sind also die aprotischen Lösungsmittel. Die eingesetzten Elektrolytlösungsmittel sollen gegenüber den ausgewählten Elektroden-Materialien indifferent und in dem Spannungsbereich, in dem die elektrochemische Zelle oder Batterie betrieben wird, gegenüber chemischer Zersetzung stabil sein.

Die Elektrolytsysteme der erfindungsgemäßen elektrochemischen Zellen oder Batterien enthalten in dem Elektrolytlösungsmittel mindestens eine ionische oder ionisierbare Verbindung gelöst oder suspendiert, die insbesondere als Leitsalz beim Betrieb der elektrochemischen Zelle oder Batterie dem Stromtransport innerhalb der elektrochemischen Zelle oder Batterie dient. Vorzugsweise ist die ionische oder ionisierbare Verbindung — im folgenden der Einfachheit halber als Leitsalz bezeichnet — zumindest teilweise, insbesondere aber vollkommen in dem Elektrolytlösungsmittel gelöst. Das Elektrolytlösungsmittel verleiht dabei den Ionen des Leitsalzes beim Betrieb der elektrochemischen Zelle oder Batterie eine hohe Ionenbeweglichkeit, so daß die erfindungsgemäßen elektrochemischen Zellen und Batterien in aller Regel nicht nur entladen, sondern auch wieder aufgeladen werden können. Dabei ist allerdings zu beachten, daß hierzu der Elektrolyt in an sich bekannter und üblicher Weise so beschaffen sein muß, daß die reversibele Oxidation und/oder Reduktion der als Elektrodenmaterial eingesetzten elektrisch leitfähigen Polymeren gewährleistet ist, ohne daß hierdurch Elektrodenmaterial oder Elektrolyt irreversibel dem Batteriesystem entzogen werden. Die Leitsalze sind in dem Elektrolytlösungsmittel im allgemeinen in Mengen von etwa 0,01 bis 2 Mol pro Liter Elektrolytlösungsmittel enthalten.

Als Leitsalze für den Elektrolyten kommen die für elektrochemische Zellen oder Batterien der in Rede stehenden Art bekannten und in der Literatur beschriebenen ionischen oder ionisierbaren Verbindungen der Alkali- oder Erdalkalimetalle in Betracht. Hierzu gehören insbesondere die Salze mit Perchlorat-, Tetrafluoroborat-, Hexafluoroarsenat-, Hexafluoroantimonat oder Hexafluorophosphat-Anionen. Des weiteren gut geeignet sind Salze von Sulfonsäuren, insbesondere von gegebenenfalls mit Alkyl- und/oder Nitrogruppen substituierten aromatischen Sulfonsäuren, insbesondere Benzolsulfonate oder Tosylate, aber auch Fluorosulfonate, wie z. B. Trifluormethansulfonat. Als Kationen für die Leitsalze kommen insbesondere die Alkalimetall-Kationen, vorzugsweise $Li^+$, $Na^+$ oder $K^+$, in Betracht. Weitere sehr gut geeignete Kationen für die Leitsalze sind auch Erdalkalimetallionen und Tetraalkammoniumionen, vorzugsweise Tetraalkylammoniumionen, vorzugsweise Tetrabutylammonium, Tetraethylammonium oder Tetramethylammonium.

Der Elektrolyt der elektrochemischen Zellen oder Batterien kann ein oder auch mehrere Leitsalze in Mischung miteinander enthalten.

Zu den geeigneten und bevorzugten Leitsalzen für die erfindungsgemäßen elektrochemischen Zellen oder Batterien gehören unter anderem : Lithiumperchlorat, Natriumperchlorat, Lithiumtetrafluoroborat, Natriumtetraphenylborat, Lithiumhexafluoroarsenat, Lithiumhexafluoroantimonat, Lithiumhexafluorophosphat und andere.

Bei den erfindungsgemäß in den elektrochemischen Zellen oder Batterien im Elektrolyt enthaltenen organischen Komplexliganden mit Ethylenglykolether-Einheiten handelt es sich um sogenannte Kronenether, Cryptanden oder Podanden. Derartige Verbindungen werden in der Arbeit von F. Vögele und E. Weber über « Neutrale organische Komplexliganden und ihre Alkalikomplexe I-Kronen-Äther, Cryptanden, Podanden » beschrieben, die in « Kontakte », Heft 1/77, Zeile 11 ff erschienen ist. Derartige organische Komplexliganden werden auch in der Arbeit von C.J. Pedersen « Cyclic Polyethers and their complexes with metal salts » beschrieben (J. Am. Chem. Soc. 89 ; 26 (Dezember 1967), Seiten 7017 bis 7036). Auf diese Arbeiten und die darin verwendete Nomenklatur wird hier ausdrücklich verwiesen.

Besonders geeignet sind Kronenether wie 15 Krone 5 (1,4,7,10,13-Pentaoxacyclopntadecan), 2-Krone-4 (1,4,7,10-Tetraoxacyclododecan), 18-Krone-6 (1,4,7,10,13,16-Hexaoxacyclooctadecan), Dibenzo-18-Krone-6.

Die organischen Komplexliganden sind im Elektrolytlösungsmittel im allgemeinen in Mengen von etwa 0,05 bis 2 Mol pro Liter Lösungsmittel enthalten.

Die genannten organischen Komplexliganden bilden mit den im Elektrolyt enthaltenen Kation

Komplexe.

Bei Kronenether-Komplexen zeigt es sich häufig, daß ein Ligandenmolekül ein Kation enthält, wobei das Kation im Hohlraum des Kronenethers sitzt. Bei Cryptanden ist das Kation im dreidimensionalen Hohlraum des Moleküls eingeordnet. Bei Podanden « umschlingen » die Molekül-Ketten das Kation spiralig oder cyclisch. Es sei in diesem Zusammenhang auf die obengenannten Arbeiten verwiesen.

Die Verwendung derartiger organischer Komplexliganden im wasserfreien Elektrolyten ist aus der DE-OS 28 52 161 bekannt. Aus dieser Literaturstelle läßt sich jedoch die besondere Eignung von Elektrolyten, die diese Verbindungen enthalten, für elektrochemische Zellen oder Batterien mit elektrochemisch oxidierbaren und/oder reduzierbaren Polymeren als Elektroden, wie sie hier aufgezeigt wird, nicht entnehmen. Insbesondere was bislang nicht bekannt, daß durch Zusatz von Komplexliganden die elektrochemische Stabilität wie auch die Reversibilität der Polymer-Methoden erheblich verbessert wird.

Die erfindungsgemäßen elektrochemischen Zellen oder Batterien enthalten als elektrodenaktives Material mindestens einer Elektrode ein elektrochemisch, vorzugsweise reversibel oxidierbares und/oder reduzierbares Polymeres, welches im oxidierten und/oder reduzierten Zustand eine elektrische Leitfähigkeit größer $10^{-2}\Omega^{-1}$ $cm^{-1}$, insbesondere gleich oder größer $10^{0}\Omega^{-1}$ $cm^{-1}$ besitzt. Hierzu gehören insbesondere die p- oder n-dotierten bzw. die elektrochemisch p- oder n-dotierbaren konjugierten Polymeren.

Unter konjugierten Polymeren werden dabei solche Polymeren verstanden, die konjugierte ungesättigte Bindungen entlang ihrer Polymerhauptkette aufweisen. Hierzu gehören alle bekannten dotierten oder dotierbaren konjugierten Polymeren, die elektrochemisch oxidierbar und/oder reduzierbar sind, wie sie in der Literatur und insbesondere der EP-A-36 118, der EP-A-49 970 sowie der EP-A-58 469, beschrieben sind.

Aus der Gruppe der dotierten bzw. dotierbaren konjugierten Polymeren sind als elektrodenaktives Material unter anderem die Acetylenpolymerisate bevorzugt, wozu insbesondere Polyacetylen selbst, aber auch die bekannten substituierten Polyacetylene oder Acetylen-Copolymerisate gehören. Die Acetylen-Polymerisate können für den Einsatz als elektrodenaktives Material mit Elektronenakzeptoren p-doriert oder mit Elektronendonatoren n-dotiert sein. Beim Betrieb der elektrochemischen Zelle oder Batterie wird der Dotierungsgrad dieser dotierten Acetylenpolymerisate geändert, insbesondere werden sie weitgehend oder vollständig entdotiert, wodurch sich der Oxidationszustand und das Oxidationspotential der Polymerisate ändert. Es können auch undotierte Acetylenpolymerisate als aktives Elektrodenmaterial eingesetzt werden, die dann beim Betrieb der elektrochemischen Zelle, insbesondere beim Aufladen, oder auch beim Entladen der Batterie, p- oder n-dotiert werden, wodurch gleichzeitig die elektrische Leitfähigkeit der Acetylenpolymerisate ansteigt.

Unter den dotierten, elektrochemisch oxidierbaren konjugierten Polymeren haben sich insbesondere auch die Pyrrolpolymeren sehr vorteilhaft als Elektrodenmaterial erwiesen. Zu den Pyrrol-Polymeren gehören ganz allgemein die Homo- und Copolymeren von Verbindungen aus der Klasse der Pyrrole. Verbindungen aus dieser Klasse sind einmal das Pyrrol selbst, sowie auch die substituierten Pyrrole, insbesondere die an den C-Atomen monoalkyl-, dialkyl-, monohalogen- oder dihalogensubstituierten Pyrrole. Bevorzugt sind die Homopolymeren des unsubstituierten Pyrrols selbst, sowie die Copolymeren des unsubstituierten Pyrrols mit substituierten Pyrrolen und/oder anderen Comonomeren. Als andere Comonomere kommen dabei z. B. Cyclopentadien, Azulen und dessen Derivate, Fulven, Inden oder auch Quadratsäure in Betracht. Ferner eignen sich als Comonomere auch andere heterocyclische Verbindungen, wie Imidazol, Thiazol, Furan, Thiophen, 2-Bromthiophen, 2,6-Dimethylpyridin oder Pyrazin. Die Copolymeren des Pyrrols enthalten im allgemeinen 50 bis 99 Gew.%, vorzugsweise 75 bis 99 Gew.%, des unsubstituierten Pyrrols und 1 bis 50 Gew.%, vorzugsweise 1 bis 25 Gew.%, an substituierten Pyrrolen und/oder anderen Comonomeren. Die Pyrrol-Polymeren sind bereits von ihrer Herstellung her, die im allgemeinen elektrochemisch durch anodische Oxidation der Monomeren erfolgt, p-leitende Verbindungen mit elektrischen Leitfähigkeiten im allgemeinen im Bereich von $10^{0}$-$10^{2}\Omega^{-1}$ $cm^{-1}$. Im übrigen sind die für Elektrodenmaterialien und elektrochemische Elemente geeigneten Pyrrolpolymeren als solche bekannt und in der Literatur hinreichend beschrieben.

Neben den dotierten und/oder elektrochemisch dotierbaren bzw. entdotierbaren konjugierten Polymeren haben sich als aktives Elektrodenmaterial insbesondere auch solche elektrisch leitfähigen Polymeren mit einer elektrischen Leitfähigkeit größer als $10^{-2}\Omega^{-1}$ $cm^{-1}$ als besonders vorteilhaft erwiesen, die elektrochemisch oxidierbare und/oder reduzierbare Redox-Gruppen mit definierter Struktur eingebaut enthalten, die mindestens zwei stabile und vorzugsweise reversibel ineinander überführbare Oxidationsstufen auszubilden vermögen. Derartige als Elektrodenmaterial für elektrochemische Zellen oder Batterien besonders gut geeignete Polymere sind beispielsweise in der DE-A-32 44 900 ausführlich beschrieben, worauf in diesem Zusammenhang ausdrücklich verwiesen wird. Zu diesen elektrisch leitfähigen Redox-Polymeren gehören p- oder n-dotierte konjugierte Polymere, insbesondere p- oder n-dotierte Polyene, vorzugsweise Acetylenpolymerisate, welche die Redox-Gruppen als Seitengruppen an der Polymerhauptkette gebunden enthalten. Bei diesen Redox-Gruppen handelt es sich vornehmlich um solche Gruppen, die chinoide Strukturen auszubilden vermögen, wobei als Redox-Gruppen 1,9-disubstituierte Phenalenreste sehr vorteilhaft sind. Die elektrisch leitfähigen Redox-Polymeren können die elektrochemisch

oxidierbaren und/oder reduzierbaren Redox-Gruppen mit definierter Struktur auch in der Polymerhauptkette eingebaut enthalten. Zu dieser Klasse von Redox-Polymeren gehören beispielsweise Poly(chinonimine) oder Poly(chinondiimine), wie Anilinschwarz; Polyindigo, Analoge des Polyindigos oder Polyindophenine. In Frage kommen auch Polyphthalocyanine und Polychinoline.

Die elektrisch leitfähigen, elektrochemisch oxidierbaren und/oder reduzierbaren Polymeren können in jeder beliebigen geeigneten Form als aktives Elektrodenmaterial in den erfindungsgemäßen elektrochemischen Zellen oder Batterien eingesetzt werden. Beispielsweise ist es möglich, diese Polymeren in Form von selbsttragenden Filmen oder Folien oder von geschäumten offenzelligen Formkörpern oder Schaumstoffen zu verwenden. Dies empfiehlt sich z. B. insbesondere dann, wenn diese Polymeren stabile, feste, selbsttragende Filme oder Folien zu bilden vermögen. In diesem Fall besteht die betreffende Elektrode aus den elektrisch leitfähigen, elektrochemisch oxidierbaren und/oder reduzierbaren Polymeren.

Gleichermaßen können die Polymeren zum Einsatz als Elektrodenmaterial in den elektrochemischen Zellen oder Batterien auf ein Substrat aufgebracht werden, beispielsweise indem man Filme oder Folien dieser Polymeren auf das Substrat auflaminiert oder aufkaschiert oder indem man das Substrat mit dem Polymeren pulverbeschichtet. Als Substrate können dabei einerseits inerte, indifferente Trägermaterialien dienen, z. B. Filme oder Folien aus üblichen unter den Betriebsbedingungen der elektrochemischen Zelle oder Batterie stabilen Polymeren, insbesondere auch Gewebe, Vliese etc. aus organischen oder anorganischen, elektrisch nicht-leitenden Materialien, z. B. Vliese aus Glaswolle oder dergleichen, die gleichzeitig als Separatoren oder Diaphragmen dienen können. Es können aber auch elektrisch leitfähige Substrate verwendet werden, wie z. B. Bleche oder Folien aus Metallen, beispielsweise Platin, Palladium, Gold, Silber, Tantal oder Edelstahl. Wenn die elektrisch leitfähigen, elektrochemisch oxidierbaren und/oder reduzierbaren Polymeren auf einem elektrisch leitfähigen Substrat aufgebracht sind, kann dieses z. B. gleichzeitig als Leitermaterialien für die Elektrode dienen.

Ferner können die elektrisch leitfähigen, elektrochemisch oxidierbaren und/oder reduzierbaren Polymeren zur Herstellung der Elektroden in Form von gesinterten oder verpreßten Pulvern, beispielsweise als Sinter- oder Preßplättchen, eingesetzt werden. Bei der Herstellung von Preß- oder Sinterelektroden können die hierbei üblichen und gebräuchlichen Zusatzstoffe mitverwendet werden, wie z. B. Bindemittel, Pigmente, Ruß, inerte Metalle oder Träger- oder Matrixmaterialien, wie z. B. andere polymere Stoffe. Diese Zusatzstoffe sind in den Elektrodenmaterialien im allgemeinen in Mengen unter 50 Gew.%, bezogen auf die gesamte Elektrode, enthalten, wobei für die Elektrodenherstellung vorzugsweise ohne diese Zusatzstoffe gearbeitet wird. Es ist auch möglich, die elektrisch leitfähigen, elektrochemisch oxidierbaren und/oder reduzierbaren Polymeren in Netz- oder Korbelektroden einzusetzen.

Die erfindungsgemäßen elektrochemischen Zellen oder Batterien haben mindestens zwei Elektroden, d. h. mindestens eine positive Elektrode (Kathode) und mindestens eine negative Elektrode (Anode). Dabei wird das aktive Elektrodenmaterial der Anode oder beider Elektroden, aus den elektrisch leitfähigen, elektrochemisch oxidierbaren und/oder reduzierbaren Polymeren gebildet. Hinsichtlich der Kombinationsmöglichkeiten von kathodenaktivem und anodenaktivem Material und somit auch der Ausgestaltungsformen der erfindungsgemäßen elektrochemischen Zellen und Batterien ist eine große Variationsbreite gegeben.

Bei einer Ausführungsform der erfindungsgemäßen elektrochemischen Zellen oder Batterien besteht nur das aktive Elektrodenmaterial der Anode aus einem elektrisch leitfähigen, elektrochemisch oxidierbaren und/oder reduzierbaren Polymeren. In diesem Fall kann die Kathode aus jedem geeigneten und an sich bekannten Kathodenmaterial bestehen. Hierfür kommen insbesondere Metalle in Betracht, deren Oxidationspotential unter dem des für das anodenaktive Material verwendeten Polymeren liegt. Metalle, die sich in diesem Fall bevorzugt als Kathoden-Material eignen, sind z. B. Platin, Palladium, Gold, Silber, Nickel, Titan und dergleichen. Als Kathode kann aber auch z. B. eine Kohlenstoffelektrode verwendet werden. In dieser Ausführungsform der elektrochemischen Zellen oder Batterien werden — im geladenen Zustand der Batterien — als aktives Elektrodenmaterial der Anode elektrisch leitende, n-dotierte Acetylenpolymerisate oder elektrisch leitende Polymere mit eingebauten Redox-Gruppen definierter Struktur bevorzugt.

In der erfindungsgemäßen elektrochemischen Zellen oder Batterien können auch sowohl das aktive Elektrodenmaterial der Kathode als auch das aktive Elektrodenmaterial der Anode aus elektrisch leitfähigen, elektrochemisch oxidierbaren und/oder reduzierbaren Polymeren gebildet werden, wobei die Oxidationsstufe des als kathodenaktives Material benutzten Polymeren höher ist als die des als anodenaktiven Material eingesetzten Polymeren. In diesem Fall ist eine Vielzahl von Variationen denkbar, wie sie beispielsweise in der EP-A-36 118 eingehend beschrieben sind. Es hat sich dabei als besonders günstig herausgestellt, wenn das anodenaktive Material und das kathodenaktive Material aus verschiedenen Polymeren besteht.

Die erfindungsgemäßen elektrochemischen Zellen der Batterien können in einer außerordentlich großen Vielfalt von Formen hergestellt werden. Aufgrund des erfindungsgemäß einzusetzenden Elektrolyt-Lösungsmittels können die Elektroden der elektrochemischen Zellen oder Batterien sehr dicht gepackt werden, wodurch insbesondere der Bau von sehr kleinen, dünnen, leichten als auch flexiblen Batterien begünstigt wird. In den erfindungsgemäßen elektrochemischen Zellen oder

Batterien können Anode und Kathode auch durch Diaphragmen oder Separatoren, wie z. B. Filterpapier, Glasfritten, poröse keramische Werkstoffe oder poröse bzw. semipermeable polymere Materialien voneinander getrennt sein. Der Zusammenbau der Batterien kann in geladenem oder ungeladenem Zustand erfolgen.

Die erfindungsgemäßen elektrochemischen Zellen oder Batterien zeichnen sich neben ihrem geringen Gewicht und ihrer hohen Energie- und Leistungsdichte insbesondere durch ihre große Stabilität, hohe Zyklisierbarkeit und geringe Selbstentladung aus. Die Batterien sind insbesondere als Sekundärelemente verwendbar, wobei ihre Eigenschaften selbst nach einer sehr hohen Anzahl von Wiederaufladevorgängen im wesentlichen unverändert und konstant sind. Erfindungsgemäße primäre Batterien zeichnen sich durch eine geringe Selbstentladung aus, so daß deren Kapazität über einen längeren Zeitraum enthalten bleibt.

Die Erfindung wird durch die nachfolgenden Beispiele näher erläutert. Die in den Beispielen angegebenen Teile und Prozente beziehen sich, sofern nicht anders vermerkt, auf das Gewicht.

Beispiel 1

Es wurde ein elektrochemisches Element gebaut, in dem in einem Zellenkörper aus Polymethylmethacrylat zwei Elektroden aus Polyacetylen eingehängt wurden. Die Elektroden hatten einen Abstand von 1 cm und eine Fläche von 2,0 $cm^2$. Der Zellenkörper wurde mit einem Elektrolyt auf der Grundlage von Propionitril, worin Natriumtetraphenylborat in 0,1-molarer Konzentration sowie der Kronenether 15 Krone 5 (1,4,7,10,13-Pentaoxacyclopentadecan) ebenfalls in 0,1 molarer Konzentration gelöst war, gefüllt. Der Zellkörper war luftdicht versiegelt worden. Mit einer Ladespannung von 3 Volt wurde das Element für die Dauer von 8 Minuten geladen. Anschließend wurde über einen Widerstand entladen. Dieser Vorgang wurde mehrfach wiederholt. Innerhalb 80 bis 90 Zyklen stieg die Kapazität das Elements derart an, daß die Elektroden mit 15 Mol.% des Dotierungsmittels, bezogen auf (CH) beladen waren. Während weiterer 50 Zyklen wurde eine konstante Beladung der Elektroden von 15 Mol.% beobachtet.

Arbeitet man vergleichsweise wie oben angegeben, jedoch ohne die Verwendung eines Kronenethers im Elektrolyten, so konnten die Elektroden nur mit 6,5 Mol.% des Dotierungsmittels, bezogen auf (CH) beladen werden. Es zeigt sich außerdem, daß die Ladekapazität bereits nach 2 bis 3 Zyklen zurück ging.

In gleicher Weise wie oben im ersten Absatz gearbeitet, konnte als Leitsalz auch Natriumhexafluorphosphat, Lithiumhexafluorphosphat oder Lithiumtetrafluorborat verwendet werden. Als Kronenether kamen außerdem 12-Krone-4 und 18-Krone-6 in Frage.

**Patentansprüche**

1. Elektrochemische Zelle oder Batterie, enthaltend mindestens 2 Elektroden sowie als Elektrolyten eine Lösung oder Suspension einer ionischen oder ionisierbaren Verbindung als Leitsalz in einem organischen, gegenüber den Elektroden indifferenten Elektrolyt-Lösungsmittel, wobei die Anode oder beide Elektroden als aktives Elektrodenmaterial ein elektrochemisch oxidierbares und/oder reduzierbares Polymeres enthält, welches im oxidierten und/oder reduzierten Zustand eine elektrische Leitfähigkeit größer $10^{-2}\Omega^{-1}$ $cm^{-1}$ besitzt, dadurch gekennzeichnet, daß der Elektrolyt einen organischen Komplexliganden aus der Gruppe der Kronenether, Kryptanden oder Podanden mit Einheiten der allgemeinen Formel

$$(-X-CH_2-CH_2-)$$

enthält, worin X = O, S oder NH bedeutet.

2. Elektrochemische Zelle oder Batterie nach Anspruch 1, dadurch gekennzeichnet, daß der Komplexligand in einer Konzentration von 0,05 bis 2 mol/l im Elektrolytlösungsmittel enthalten ist.

**Claims**

1. An electrochemical cell or battery containing two or more electrodes and an electrolyte consisting of a solution or suspension of an ionic or ionizable compound, as a conductive salt, in an organic electrolyte solvent which is inert to the electrodes, the anode or both electrodes containing, as active electrode material, an electrochemically oxidizable and/or reducible polymer which, in the oxidized and/or reduced state, has an electrical conductivity greater than $10^{-2}\Omega^{-1}cm^{-1}$, wherein the electrolyte contains an organic complex ligand from the group consisting of crown ethers, cryptands or podands possessing units of the formula

$$(-X-CH_2-CH_2-)$$

where X is O, S or NH.

2. An electrochemical cell or battery as claimed in claim 1, wherein the complex ligand is present in a concentration of from 0.05 to 2 mol l of electrolyte solvent.

**Revendications**

1. Pile ou cellule électrochimique, contenant au moins deux électrodes, comme aussi, à titre d'électrolyte, une solution ou suspension d'un composé ionique ou ionisable à titre de sel conducteur, dans un solvant d'électrolyte, organique, inerte vis-à-vis des électrodes, où l'anode ou les deux électrodes contient ou contiennent, à titre de matériau d'électrode actif, un polymère oxydable et/ou réductible par voie électrochimique, qui possède une conductibilité électrique ou conductivité supérieure à $10^{-2}\Omega^{-1}$ $cm^{-1}$ à l'état oxydé et/ou réduit, caractérisée en ce que l'électrolyte contient un ligand complexe, organique, appartenant au groupe des éthers-couronnes, des cryptands ou des podands avec des unités qui répondent à la formule générale

$$(-X-CH_2-CH_2-)$$

dans laquelle X = O, S ou NH.

2. Pile ou cellule électrochimique suivant la revendication 1, caractérisée en ce que le solvant de l'électrolyte contient le ligand complexe en une concentration de 0,05 à 2 moles/l.